# EUROPÄISCHE PATENTANMELDUNG

(11) **EP 1 500 333 A1**
(43) Veröffentlichungstag der Anmeldung: **26.01.2005**
(21) Anmeldenummer: 04016758.7
(22) Anmeldetag: 15.07.2004
(51) Int. Cl.: A23K 1/18, A23K 1/00

(54) **Haustierzusatzfuttermittel**

(30) Priorität: 22.07.2003 DE 20311321 U
(71) Anmelder: Bergerhoff Hartmann OHG, 65812 Bad Soden (DE)
(72) Erfinder: Hartmann, Michael, 80639 München (DE); Bergerhoff, Ralf, 65812 Bad Soden (DE)
(74) Vertreter: Prietsch, Reiner, Dipl.-Ing.

(57) **Zusammenfassung**

Ein Haustierzusatzfuttermittel, das der Tierhalter wahlweise in unterschiedlichen Geruchs- und/oder Geschmacksrichtungen verfüttern oder zur Verabreichung von gesundheits- oder befindlichkeitsfördernden Mitteln verwenden kann hat die Form eines offenen Napfes aus einer ersten Futtermasse und kann von dem Tier in der Regel als Ganzes aufnommen werden. Der Boden des Napfes kann mit einer zweiten besonders wohlschmeckenden Futtermasse als Lockstoff beschichtet sein. Der darüber befindliche Raum kann mit anderen, insbesondere auch gesundheitsfördernden Futtermitteln gefüllt werden. Diese können wiederum mit einer dritten Futtermasse pastöser Konsistenz abgedeckt werden. Mehrere derartige Näpfe können als Verpackungseinheit mit beigepackter dritter Futtermasse als Verpackungseinheit bereitgestellt werden.

## Beschreibung

Insbesondere für Katzen und Hunde sind unter zahlreichen Phantasiebezeichnungen unterschiedliche Zusatzfuttermittel im Handel, darunter auch solche zur stückweisen Verfütterung, sei es zur Belohnung und/oder zu gesundheitsfördernden bzw. therapeutischen Zwecken. Die Stücke können die Form von Brocken, Würfeln, Ringen, Hanteln usw. haben, ohne dass dies für das Tier oder den eigentlichen Zweck des Zusatzfuttermittels von Bedeutung ist.

Der Erfindung liegt die Aufgabe zugrunde, ein Zusatzfuttermittel zu schaffen, das der Tierhalter wahlweise in unterschiedlichen Geruchs- und/oder Geschmacksrichtungen verfüttern oder zur Verabreichung von gesundheits- oder befindlichkeitsfördernden Mitteln verwenden kann.

Erfindungsgemäß ist diese Aufgabe dadurch gelöst, dass bei einem zur stückweisen Verfütterung bestimmten Haustierzusatzfuttermittel die Stücke jeweils die Form eines offenen Napfes haben, der aus einer ersten Futtermasse besteht und dessen Größe so gewählt ist, dass das Tier den Napf in der Regel als Ganzes aufnimmt und zerkaut.

Dieses Zusatzfuttermittel kann wie bisher als Belohnung gegeben werden. Die Napfform ermöglicht es jedoch, das jeweils verabreichte Stück mit fressbaren Zusätzen zu ergänzen, die wahlweise die Geruchs- und/oder Geschmacksrichtung verändern und damit den Charakter unterschiedlicher Belohnungen erhalten. Zusätzlich oder stattdessen kann der Napf auch mit oral zu verabreichenden Präparaten gefüllt werden, die das allgemeine Wohlbefinden des Tieres fördern oder therapeutischen Zwecken dienen.

Insbesondere wenn die erste Futtermasse, aus der der Napf besteht, relativ geruchs- oder geschmacksneutral ist, besteht eine bevorzugte Ausführungsform darin, dass der Boden des Napfes mit einer zweiten vorzugsweise geruchsund/oder geschmacksintensiven Futtermasse beschichtet ist, die einerseits die Funktion eines Lockmittels hat und andererseits zumindest den Geruch von in den Napf eingebrachten, gesundheitsfördernden Präparaten, deren Aufnahme das Tier in der Regel verweigert, überdecken kann.

Eine Weiterbildung dieser Ausführungsform hat zwischen der Schicht aus der zweiten Futtermasse und dem Oberrand des Napfes einen Freiraum zur Befüllung sowohl mit den genannten Präparaten als auch mit einer als Verschluss dienenden dritten Futtermasse von vorzugsweise pastöser Konsistenz.

Der Napf kann an seinem Oberrand einen nach innen gerichteten, umlaufenden Wulst haben, der sowohl die Festigkeit des Napfes verbessert, als auch eine Rückhaltefunktion für in den Napf eingebrachte Ergänzungsstoffe haben kann.

Das vorgeschlagene Zusatzfuttermittel ist insbesondere dann preiswert herstellbar, wenn die den Napf bildende, erste Futtermasse eine Backmasse ist. Statdessen kann die erste Futtermasse auch aus einer leicht schluckbaren, nassfutterähnlichen Masse ausreichender Stabilität bestehen.

Gemäß einer bevorzugten Weiterbildung des Zusatzfuttermittels ist letzteres Teil einer Verpackungseinheit, die außerdem mindestens einen vorzugsweise tubenförmigen Behälter umfasst, der eine dritte Futtermasse pastöser Konsistenz enthält.

Diese dritte Futtermasse kann eine der bei Haustieren beliebten Geruchs- und Geschmacksrichtungen, z.B. "Wild" oder "Geflügel" haben. Der Tierhalter kann also von Fall zu Fall zwischen einer Verfütterung des Zusatzfuttermittels allein oder zusätzlich gefüllt mit der betreffenden dritten Futtermasse in geänderter geruchlicher und geschmacklicher Form wählen. Dabei dient der Behälter mit der dritten Futtermasse, zumal wenn er die Form einer kleinen Tube mit Schraubverschluss hat, gleichzeitig der Frischhaltung und der bequemen Portionierung.

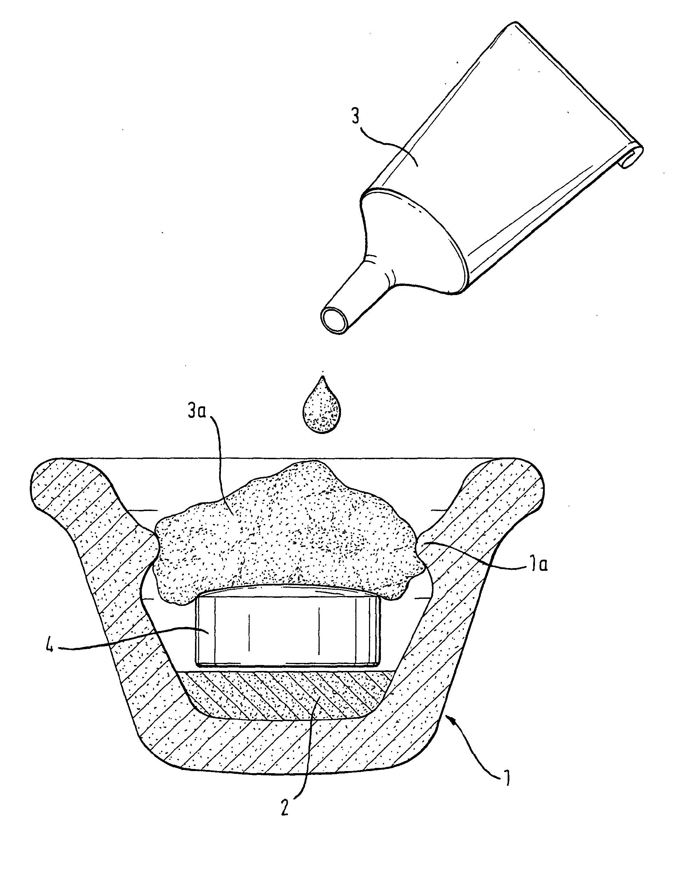

In der Zeichnung ist das vorgeschlagene Haustierzusatzfuttermittel in einer beispielhaft gewählten Ausführungsform perspektivisch dargestellt.

Der Napf 1 besteht aus einer durch Backen verfestigten, und getrockneten, ersten Futtermasse, die von neutralem Geruch und Geschmack sein kann. Der Boden des Napfes 1 ist mit einer Schicht aus einer zweiten Futtermasse 2 bedeckt. In dieser Form bezieht der Tierhalter das Zusatzfuttermittel. Der Napf hat nahe seinem oberen Rand einen nach innen einspringenden Wulst 1a.

Zusammen mit dem Zusatzfuttermittel 1, 2 erwirbt der Tierhalter eine Anzahl von Tuben, wie etwa die Tube 3. Die Tuben sind mit Futtermassen unterschiedlicher Geruchs- und Geschmacksrichtungen gefüllt. Zur Verabreichung als Belohnung füllt der Tierhalter den Freiraum in dem Napf 1 oberhalb der zweiten Futtermasse 2 nach seiner Wahl mit einer passenden Menge der dritten Futtermasse 3a aus der Tube 3.

Will der Tierhalter hingegen das Zusatzfuttermittel zur Verabreichung von Zusatzstoffen benutzen, so bringt er in den Napf 1 oberhalb der zweiten Futtermasse 2 den jeweiligen Zusatz, hier symbolisch dargestellt durch eine Tablette 4, ein. In der Regel wird er den verbleibenden Freiraum auch in diesem Fall mit der dritten Futtermasse 3a auffüllen, z.B. um nötigenfalls den Geruch des Zusatzes zu überdecken.

Stattdessen kann der Zusatzstoff 4 auch bereits gebrauchsfertig in dem Napf 1 mit der zweiten Futtermasse 2 enthalten sein. Der Tierhalter erwirbt in dieser Ausführungsform eine Verpackungseinheit, z.B. ein tiefgezogenes Kunststofftablett mit zahlreichen Mulden zu je einem Napf und einigen weiteren Mulden für Kunststofftuben oder dergleichen, die unterschiedliche dritte Futtermassen in Pastenform enthalten. Jeweils eine bestimmte Anzahl von Näpfen enthält einen Standardzusatzstoff 4, z.B. gegen Ungeziefer, für besseres Fell, usw. und ist entsprechend gekennzeichnet. Der Tierhalter füllt vor der Verabreichung den verbliebenen Freiraum des Napfes mit der dritten Futtermasse derjenigen Geruchs- und Geschmacksrichtung, die sein Tier erfahrungsgemäß bevorzugt.

## Patentansprüche

1. Haustierzusatzfuttermittel zur stückweisen Verfütterung, **dadurch gekennzeichnet, dass** die Stücke jeweils die Form eines offenen Napfes (1) haben, der aus einer ersten Futtermasse besteht und dessen Größe so gewählt ist, dass das Tier den Napf in der Regel als Ganzes aufnimmt und zerkaut.

2. Haustierzusatzfuttermittel nach Anspruch 1, **dadurch gekennzeichnet, dass** der Boden des Napfes mit einer zweiten Futtermasse (2) als Lockstoff beschichtet ist.

3. Haustierzusatzfuttermittel nach Anspruch 1 oder 2, **dadurch gekennzeichnet, dass** zwischen der Schicht aus der zweiten Futtermasse und dem Oberrand des Napfes ein ausreichender Freiraum zur Befüllung sowohl mit anderen, zur Aufnahme durch das Tier bestimmten Arznei- und/oder Futtermitteln (4) als auch einer dritten, vorzugsweise beigestellten Futtermasse (3) verbleibt.

4. Haustierzusatzfuttermittel nach einem der Ansprüche 1 bis 3, **dadurch gekennzeichnet, dass** der Napf an seinem Oberrand einen nach innen gerichteten umlaufenden Wulst (1a) hat.

5. Haustierzusatzfuttermittel nach einem der Ansprüche 1 bis 4, **dadurch gekennzeichnet, dass** die erste Futtermasse eine Backmasse oder ein formbeständiges Nassfuttermittel ist.

6. Verpackungseinheit, enthaltend mehrere Haustierzusatzfuttermittel nach einem der Ansprüche 1 bis 5, und mindestens einen vorzugsweise tubenförmigen Behälter, der eine dritte Futtermasse (3) pastöser Konsistenz zum Einfüllen in den Napf (1) oder zum Verschließen dessen enthält.
